# DEMANDE DE BREVET EUROPEEN

(11) **EP 2 002 992 A1**
(43) Date de publication de la demande: **17.12.2008**
(21) Numéro de dépôt: 08010329.4
(22) Date de dépôt: 06.06.2008
(51) Int. Cl.: B60B 1/04, B60B 21/06

(54) **Roue comprenant une jante, un moyeu, et un dispositif de raccordement de la jante au moyeu**

(30) Priorité: 12.06.2007 FR 0704165
(71) Demandeur: Salomon S.A., 74370 Metz-Tessy (FR)
(72) Inventeur: Veux, Jean-Luc, 74150 Rumilly (FR); Feliciano, Antoine, 74210 Doussard (FR)

(57) **Abrégé**

Roue (1) comprenant une jante (2), un moyeu (3), et au moins un dispositif de raccordement (4) de la jante (2) au moyeu (3), le dispositif de raccordement (4) comprenant un rayon (5) associé à une première tête (8), le moyeu (3) définissant une première rainure (34), pour l'accueil d'une portion du rayon (5), dans un plan perpendiculaire à l'axe (X-X') de la roue (1) et selon une direction tangentielle par rapport au moyeu (3), le moyeu (3) définissant encore une butée (41, 81, 82) selon la direction tangentielle pour l'appui de la tête (8).

Le moyeu (3) comprend un moyen de retenue de la tête (8) selon une direction radiale, quand le rayon (5) est orienté tangentiellement par rapport au moyeu (3).

## Description

L'invention se rapporte au domaine des roues comprenant une jante, un moyeu, et au moins un dispositif de raccordement de la jante au moyeu, dans le cas où le dispositif de raccordement comprend un rayon. L'invention concerne particulièrement une roue munie de rayons, un moyeu prévu pour la roue, ainsi qu'un procédé de fabrication des roues.

De tels roues et moyeux sont destinés aux bicyclettes, et aussi à d'autres véhicules comme les fauteuils à roues, ou autre.

Une roue comprend traditionnellement une jante, un moyeu, et au moins un dispositif de raccordement de la jante au moyeu. Lorsque le dispositif comprend un rayon, il peut être prévu de lui associer une première tête pour l'accrocher au moyeu. Il peut aussi être prévu que le moyeu présente une première rainure, pour l'accueil d'une portion de la longueur du rayon, dans un plan perpendiculaire à l'axe de la roue et selon une direction tangentielle par rapport au moyeu. En complément le moyeu présente encore une butée, selon la direction tangentielle, sur laquelle la tête prend appui quand le rayon est sous tension. Dans le cas de roues à rayons sous tension, lorsque la roue est montée et réglée, chaque rayon est sous tension à l'état repos de la roue. Cela maintient la portion de la longueur de rayon dans la rainure, et la tête au contact de la butée tangentielle. En conséquence chaque rayon exerce sur le moyeu une force tangentielle, c'est-à-dire décalée par rapport à l'axe de la roue. On parle de roue à montage tangentiel.

Un avantage, qui résulte de ce montage connu, est qu'il est possible d'utiliser un rayon droit avec une tête coaxiale. Par exemple le rayon et la tête peuvent former une pièce monobloc en métal. Cela permet une transmission des efforts selon la direction longitudinale du rayon. En d'autres termes aucun couple mécanique parasite n'est appliqué au rayon, comme cela aurait été le cas par exemple avec un rayon métallique à extrémité coudée.

Un inconvénient a toutefois été observé sur certaines roues à montage tangentiel, pour lesquelles le moyeu présente une rainure et une butée pour accueillir le rayon et sa tête.

Il arrive que, lors d'une sollicitation exceptionnelle conduisant par exemple à une totale détente du rayon, là tête du rayon soit momentanément écartée de la butée. Une conséquence peut être la séparation du rayon et du moyeu. En d'autres termes il peut arriver qu'une tête se décroche du moyeu.

Bien entendu, la sollicitation exceptionnelle doit être comprise comme arrivant de manière inhabituelle, par exemple en heurtant une pierre ou une bordure, en roulant dans un trou, ou autre. Une déformation de la jante induit alors une baisse de la tension du rayon, et parfois une baisse suffisante pour permettre un décrochage de la tête.

Par rapport à cela, l'invention a notamment pour but d'empêcher un décrochage de la tête d'un dispositif de raccordement par rapport à un moyeu.

Un autre but de l'invention est de simplifier le montage d'une roue. Un autre but encore est de proposer un dispositif de montage amélioré des rayons.

Pour ce faire l'invention propose une roue comprenant une jante, un moyeu, et au moins un dispositif de raccordement de la jante au moyeu, le dispositif de raccordement comprenant un rayon associé à une première tête, le moyeu définissant une première rainure, pour l'accueil d'une portion du rayon, dans un plan perpendiculaire à l'axe de la roue et selon une direction tangentielle par rapport au moyeu, le moyeu définissant encore une butée selon la direction tangentielle pour l'appui de la tête.

La roue selon l'invention est caractérisée par le fait que le moyeu comprend un moyen de retenue de la tête selon une direction radiale, quand le rayon est orienté tangentiellement par rapport au moyeu.

Parce qu'il agit selon une direction radiale de la roue, le moyen de retenue maintient la tête du dispositif de raccordement contre ou en regard de la butée quel que soit l'état de tension du rayon. Etant donné que la tête est solidarisée au rayon, la portion concernée de ce dernier reste dans la rainure. Cela signifie en pratique que la tête reste accrochée au moyeu, et que par corollaire le rayon reste solidarisé au moyeu. En d'autres termes le rayon ne se sépare pas du moyeu, quels que soient les efforts s'exerçant sur la roue.

Parmi les avantages qui en résultent on peut citer le maintien en bon état de la roue, même si celle-ci subit une sollicitation exceptionnelle. La roue est plus fiable dans le temps, et la maintenance est réduite. Le montage de la roue est plus simple, parce que la tête est maintenue même en l'absence de tension du rayon.

D'autres caractéristiques et avantages de l'invention seront mieux compris à l'aide de la description qui va suivre, en regard du dessin annexé illustrant, par des formes de réalisation non limitatives, comment l'invention peut être réalisée, et dans lequel :
- la figure 1 est une vue en perspective d'une roue, selon une première forme de réalisation de l'invention,
- la figure 2 est une vue en perspective d'une partie de la roue de la figure 1, montrant notamment le moyeu,
- la figure 3 est une coupe longitudinale du moyeu de la roue selon la première forme de réalisation,
- la figure 4 est une vue en perspective d'une portion du moyeu définissant une première rainure et une deuxième rainure, avec un rayon en phase d'approche du moyeu,
- la figure 5 est similaire à la figure 4, dans un cas où la tête d'un premier dispositif de raccordement est introduite radialement dans la première rainure,
- la figure 6 est similaire à la figure 4, dans un cas où la tête du premier dispositif de retenue est en regard d'une première butée, et où une portion du rayon est située dans la première rainure, selon une direction tangentielle par rapport au moyeu,
- la figure 7 est similaire à la figure 6, et ajoute par rapport à celle-ci un deuxième dispositif de raccordement au niveau de la deuxième rainure,
- la figure 8 est une vue similaire aux figures 4 à 7, pour une deuxième forme de réalisation de l'invention,
- la figure 9 est une vue similaire à la figure 8, pour une troisième forme de réalisation de l'invention,
- la figure 10 est une vue similaire à la figure 4, avec deux rayons en phase d'approche du moyeu, pour une quatrième forme de réalisation de l'invention,
- la figure 11 est similaire à la figure 5, pour la quatrième forme de réalisation de l'invention,
- la figure 12 est similaire à la figure 7, pour la quatrième forme de réalisation de l'invention.

Bien que les formes de réalisation concernent une roue adaptée à une bicyclette, il doit être compris qu'elles ont trait également à des roues adaptées à d'autres véhicules comme évoqué avant.

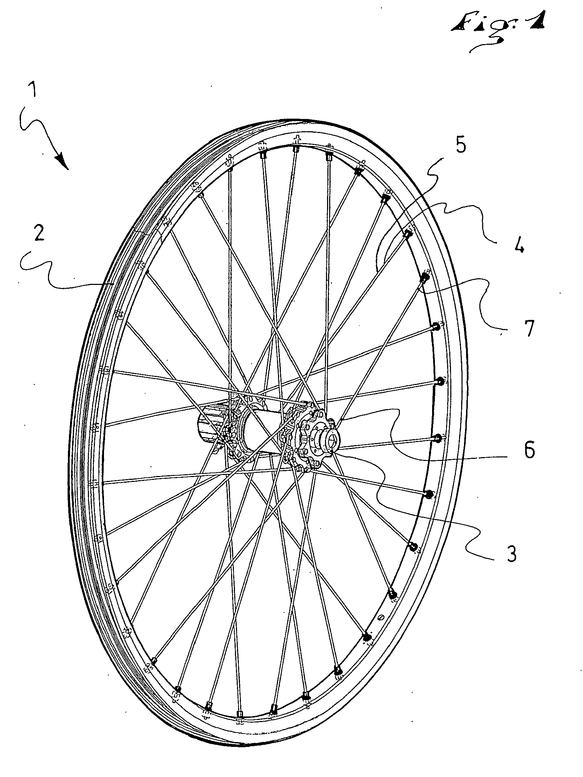

La première forme de réalisation est présentée à l'aide des figures 1 à 7.

Comme le montre la figure 1, une roue 1 comprend une jante 2, un moyeu 3, et des dispositifs de raccordement 4 de la jante 2 au moyeu 3.

La jante 2, bien connue de l'homme du métier, n'est pas décrite en détail. Néanmoins il est précisé que cette jante 2 peut présenter tout profil, notamment pour recevoir un pneu ou un boyau. La jante peut comprendre tout matériau convenable, comme un métal ou des fibres composites associées à un liant.

Chaque dispositif de raccordement 4 comprend un rayon 5 qui s'étend selon une direction longitudinale L entre une première extrémité 6, prévue pour être solidarisée au moyeu 3, et une deuxième extrémité 7, prévue pour être solidarisée à la jante 2.

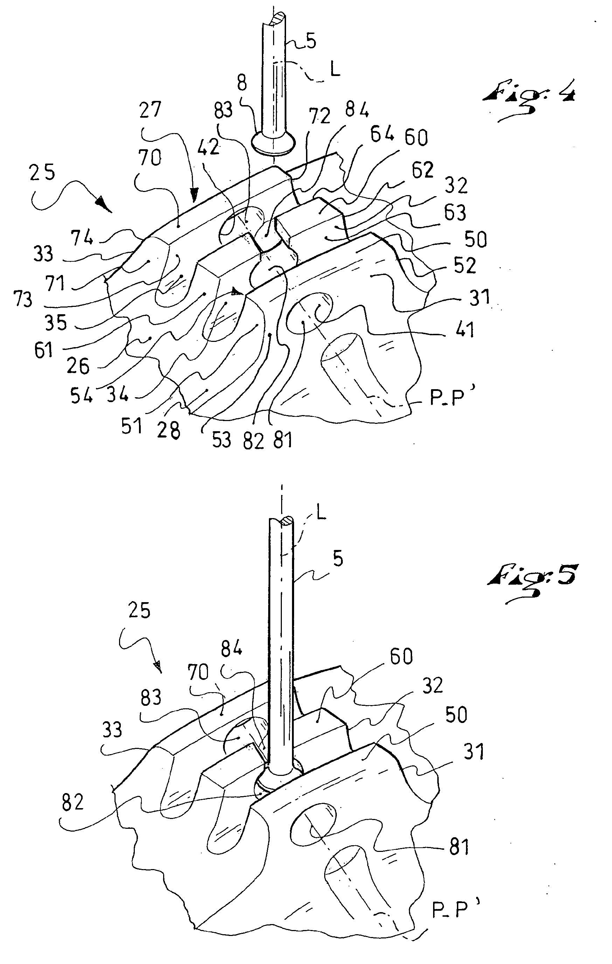

Selon la première forme de réalisation, comme on le voit par exemple sur la figure 4, le dispositif de raccordement 4 comprend une première tête 8 solidarisée au rayon 5, et constituée en l'occurrence par un élargissement coaxial du rayon. Par exemple la tête 8 et le rayon 5 forment une pièce monobloc, laquelle peut être réalisée à partir d'un alliage métallique comprenant un acier, un aluminium, ou autre. La tête 8 peut être formée par estampage du rayon 5 vers la première extrémité 6. Cela permet la fabrication d'un dispositif de raccordement à coût réduit.

Bien entendu, il peut être alternativement prévu que la tête soit rapportée sur le rayon, ou que d'autres matériaux soient utilisés. Dans ce cas un rayon comprenant des fibres synthétiques peut convenir

Selon la première forme de réalisation décrite le rayon 5 présente une section circulaire, et la tête 8 présente elle aussi une section circulaire. Ces caractéristiques donnent au rayon un aspect conventionnel, et fait appel à des techniques de fabrication économiques. Par exemple le rayon peut être obtenu par tréfilage.

Cependant, alternativement, il peut être prévu de donner au rayon 5 et / ou à la tête 8 toute section ou forme appropriée. Par exemple le rayon peut présenter une section rectangulaire, oblongue, ou autre. Cette section, sensiblement effilée, peut conférer au rayon 5 des propriétés aérodynamiques.

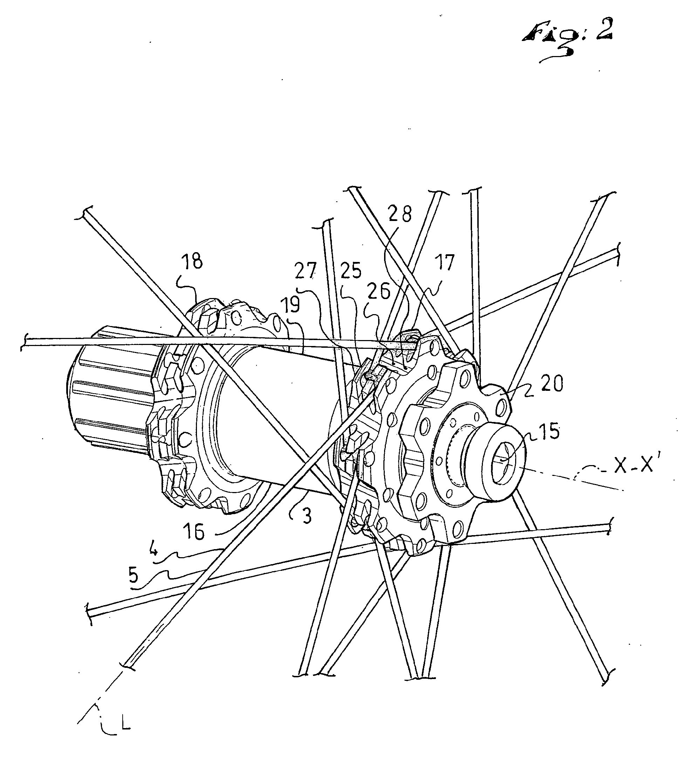

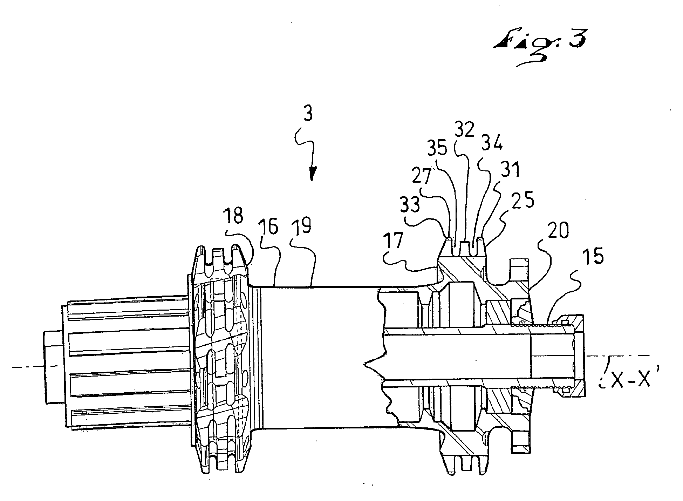

Le moyeu 3, quant à lui, est présenté plus en détail à l'aide des figures 2 et 3.

De manière conventionnelle le moyeu 3 comprend un arbre 15, d'axe X-X', prévu pour guider en rotation un corps 16. Bien entendu l'axe X-X' de l'arbre 15 est aussi l'axe du moyeu 3 et l'axe de la roue 1. L'arbre 15 est destiné à être solidarisé de manière amovible à un support tel que la fourche ou le cadre d'une bicyclette. Le corps 16 comprend par exemple un premier flasque 17 et un deuxième flasque 18 reliés l'un à l'autre par un fût 19. Les flasques 17, 18 sont prévus pour retenir les extrémités 6 de rayons 5. Plus précisément, comme on le verra plus en détail après, le premier flasque 17 retient une première nappe de rayons, et le deuxième flasque 18 retient une deuxième nappe de rayons.

Selon la première forme de réalisation de l'invention, il est prévu aussi un flasque porte-disque 20. Ce dernier est destiné à supporter un disque de freinage non représenté. Cette caractéristique est connue de l'homme du métier, et n'est pas décrite ici.

Afin de faciliter la fabrication du corps 16, les flasques 17, 18, 20 et le fût 19 forment une pièce monobloc. Mais il pourrait alternativement être prévu un assemblage, par exemple d'un flasque avec le fût.

Bien entendu, le corps 16 est guidé en rotation autour de l'arbre 15 par tout moyen approprié, lequel peut comprendre des roulements, des paliers, des joints, et tout élément utile.

Pour retenir les rayons 5, chacun des premier 17 et deuxième 18 flasques est structuré comme expliqué ci-après. Pour des raisons de commodité, les explications sont données pour un seul flasque, par exemple le premier 17, mais le deuxième flasque 18 est bien entendu construit de la même façon.

D'une manière générale le premier flasque 17 comprend une alternance de doigts 25 et d'encoches 26 répartis de manière circulaire dans un plan perpendiculaire à l'axe X-X'. Chaque doigt est une extension du flasque 17 orientée radialement, dans un sens d'éloignement de l'axe X-X'. Par corollaire une encoche 26 sépare deux doigts successifs. Les encoches 26 allègent le flasque 17, et le moyeu 3 par voie de conséquence.

Selon la première forme de réalisation, et de manière non limitative, les doigts 25 et les encoches 26 présentent respectivement sensiblement la même structure. En particulier les mêmes dimensions radiales. Cela signifie notamment que chaque sommet 27 d'un doigt 25, ou que chaque fond 28 d'une encoche 26, est à la même distance de l'axe X-X'. Cela facilite l'équilibrage en rotation du moyeu 3.

Pour améliorer encore l'équilibrage, les doigts 25 et les encoches 26 sont répartis régulièrement à la périphérie du premier flasque 17.

A titre d'exemple non limitatif, un flasque 17 présente sept doigts 25 et sept encoches 26. Chaque doigt 25 porte deux extrémités 6 de deux rayons 5. Au total un flasque 17 porte une nappe de quatorze rayons 5, et la roue 1 comprend vingt huit rayons. Ce nombre non limitatif offre un bon compromis entre résistance mécanique et poids de la roue. Il peut bien entendu alternativement être prévu un nombre de rayons par flasque supérieur, ou inférieur, à quatorze.

Selon la direction axiale X-X', chaque doigt comprend une première ailette 31, une deuxième ailette 32, et une troisième ailette 33. Au sens large, chaque flasque et donc le moyeu comprend trois collerettes parallèles définissant chacune les ailettes 31, 32, 33 des doigts 25, ces collerettes étant séparées axialement par des rainures périphériques 34, 35.

De par la configuration des flasques 17, 18, le moyeu 3 définit donc la première 34 et la deuxième 35 rainures, pour l'accueil de portions de rayon 5, dans un plan perpendiculaire à l'axe X-X' de la roue 1 et selon une direction tangentielle par rapport au moyeu.

On verra mieux par la suite, notamment à l'aide des figures 4 à 7, que le moyeu 3 définit encore, au niveau des flasques, des butées 41, 42 pour l'appui de têtes 8 de dispositifs de raccordement 4 quand les rayons 5 sont sous tension, ou non.

Selon l'invention, le moyeu de la roue 1 comprend un moyen de retenue de la tête 8 selon une direction radiale, quand le rayon 5 est orienté tangentiellement par rapport au moyeu 3.

Ce moyen de retenue maintient la tête 8 par rapport au flasque 17 selon une direction radiale. En d'autres termes le moyen de retenue empêche un éloignement radial de la tête 8 par rapport à l'axe X-X'. En conséquence le rayon 5 reste en place dans la rainure 34, même s'il n'est pas sous tension. Cela facilite le montage de la roue 1, comme on le verra mieux par la suite. Cela évite aussi un décrochage intempestif d'un rayon 5 par rapport au moyeu, pendant la conduite de la bicyclette, par exemple lors d'un choc sur la roue 1.

Comme on peut l'observer par exemple sur la figure 4, la première ailette 31 présente la forme générale d'une dent avec un sommet 50 sensiblement plat. La première ailette s'étend en longueur, selon une direction tangentielle du premier flasque 17, depuis une première extrémité 51 jusqu'à une deuxième extrémité 52. Le sommet 50 joint l'une à l'autre les extrémités 51, 52. Bien entendu, chaque extrémité 51, 52 de l'ailette 31 délimite en partie une encoche 26. Les encoches 26 s'étendent axialement sur toute l'épaisseur de chaque collerette. Ainsi l'ailette 31 est un segment circulaire d'une collerette du premier flasque 17. L'ailette 31 s'étend en épaisseur, selon la direction X-X', entre deux faces opposées 53, 54.

Les deuxième 32 et troisième 33 ailettes sont réalisées dans le même esprit. Ainsi la deuxième ailette 32 présente un sommet 60, une première extrémité 61, une deuxième extrémité 62, et deux faces opposées 63, 64. La troisième ailette 33 présente un sommet 70, une première extrémité 71, une deuxième extrémité 72, et deux faces opposées 73, 74.

Au final les trois ailettes 31, 32, 33 sont parallèles entre elles, et orientées chacune dans un plan perpendiculaire à l'axe X-X'. Les premières extrémités respectives 51, 61, 71 des ailettes sont alignées selon l'axe X-X'. Les secondes extrémités 52, 62, 72 des ailettes sont alignées selon l'axe X-X'. Et enfin les sommets 50, 60, 70 sont alignés selon l'axe X-X'.

Selon la première forme de réalisation décrite, et de manière non limitative, les première 41 et deuxième 42 butées sont obtenues par perçage des ailettes 31, 32, 33 dans le sens de leur épaisseur. C'est pourquoi la première ailette 31 présente un trou 81 entre ses faces 53, 54. Par analogie la deuxième ailette 32 présente un trou 82 entre ses faces 63, 64, et la troisième ailette 33 un trou 83 entre ses faces 73, 74. Ces trous 81, 82, 83, qui sont des trous traversants, définissent des surfaces d'appui pour les têtes 8 de rayons 5. En d'autres termes le premier trou transversal 81 de la première ailette 31 forme la butée 41 pour l'appui de la tête 8 quand le rayon 5 est sous tension. On verra mieux par la suite que le trou 81 joue le rôle d'une butée à la fois dans une direction tangentielle et dans une direction radiale. Cela permet au moyeu 3 de comprendre une double butée, tangentielle et radiale. Par analogie le deuxième trou transversal 82 de la deuxième ailette 32 forme la butée 41 et / ou la butée 42, et le troisième trou transversal 83 forme la butée 42. Là encore le troisième trou 83 joue le rôle d'une butée à la fois dans une direction tangentielle et dans une direction radiale.

Dans le but de simplifier la fabrication du moyeu 3, les trois trous 81, 82, 83 sont réalisés par perçage par exemple à l'aide d'un forêt selon un axe P-P'. C'est pourquoi les trous 81, 82, 83 sont circulaires et traversants. Cependant d'autres formes peuvent convenir. Par exemple les trous peuvent être non traversants, c'est-à-dire borgnes.

Selon la première forme de réalisation les trous 81, 82, 83 sont coaxiaux, c'est-à-dire alignés entre eux. Cependant ils 81, 82, 83 sont orientés selon un axe P-P' décalé par rapport à l'axe X-X', comme cela sera expliqué plus loin.

Il s'ensuit que le trou 81 de la première ailette 31 est proche de la première extrémité 51, alors que le trou 83 de la troisième ailette 33 est quant à lui proche de la deuxième extrémité 72. Par corollaire le trou 82 de la deuxième ailette 32 est sensiblement à mi-chemin entre les extrémités 61, 62.

Toujours selon la première forme de réalisation, on observe que le sommet 50 de la première ailette 31 relie les extrémités 51, 52 de manière continue. Par analogie le sommet 70 de la troisième ailette 33 relie les extrémités 71, 72 de manière continue. Par contre le sommet 60 de la deuxième ailette 32 est discontinu. Un premier passage 84 ouvre le sommet 60 vers le trou 82 de la deuxième ailette 32. Ce passage 84 est réalisé par toute technique connue comme le fraisage, ou autre. Le passage 84 permet de solidariser de manière réversible un ou plusieurs rayons 5 à un doigt 25, comme expliqué chronologiquement ci-après à l'aide des figures 4 à 7.

Comme on le voit d'abord sur la figure 4, un dispositif de raccordement 4 est mis en place au niveau du moyeu 3. Ainsi un rayon 5 associé à une tête 8 est approché de la première rainure 34, dans un plan perpendiculaire à l'axe X-X', et selon une direction radiale. Cela signifie que la direction longitudinale L du rayon 8 coupe sensiblement l'axe X-X'. Le rayon 5 est disposé de façon que la tête 8 se trouve au-dessus de la première rainure 34, à hauteur du passage 84.

Ensuite, comme montré à la figure 5, le rayon 5 est déplacé radialement vers le moyeu 3 pour faire entrer la tête 8 dans la rainure 34 et dans les premier 81 et deuxième 82 trous. Cela est possible parce que le passage 84 élargit localement la première rainure 34.

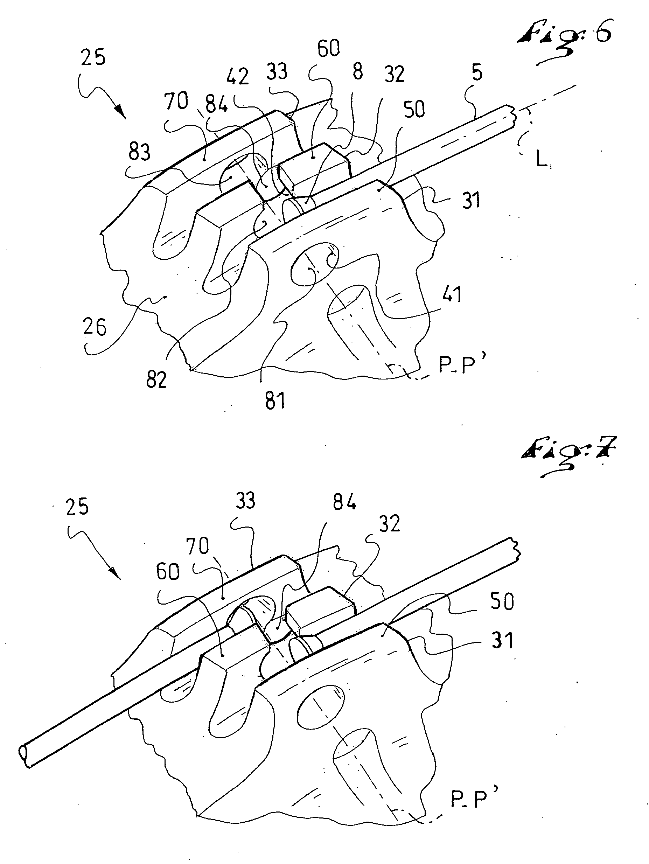

Enfin, comme on le voit sur la figure 6, le rayon 5 est basculé dans la rainure 34 pour prendre une direction tangentielle par rapport au moyeu 3. Dans ce cas une portion du rayon 5 est maintenue selon l'axe X-X' par les ailettes 31, 32. La tête 8 est maintenue contre une portion d'un ou des deux trous 81, 82 lorsque le rayon 5 est sous tension. Ainsi les trous 81, 82 constituent la première butée 41 dans la direction tangentielle qui permet la mise en tension du rayon 5.

De plus, conformément à l'esprit de l'invention, le sommet 50 de la première ailette 31 maintient la tête 8 radialement quand le rayon 5 est basculé dans la rainure 34. En effet, la rainure 34 présente une largeur égale ou à peine supérieure à celle du diamètre du rayon. Par exemple des valeurs de largeur de rainure et de diamètre de rayon de l'ordre de 2 mm conviennent. La tête 8 quant à elle présente un diamètre sensiblement supérieur à celui du rayon. Un diamètre de tête de l'ordre de 4 mm convient. Par corollaire le passage 84 s'étend sur quelques millimètres, c'est-à-dire sur au moins 2 mm.

En conséquence, la tête 8 prend appui sur le sommet 50 si elle est sollicitée radialement dans un sens d'éloignement de l'axe X-X'. Cela signifie que lorsque la roue 1 est montée, les premières extrémités 6 des rayons 5 ne peuvent plus quitter le moyeu de manière intempestive.

On peut résumer la première forme de réalisation de l'invention en disant que le moyen de retenue de la tête 8, selon une direction radiale, comprend le sommet continu 50 d'une ailette 31, là où il contourne le premier trou 81, lequel définit la butée 41 pour l'appui de la tête quand le rayon 5 est sous tension: En d'autres termes chaque trou 81, 83 définit une double butée radiale et tangentielle. Les butées sont sur les ailettes extérieures.

Toujours selon la première forme de réalisation de l'invention, comme il apparaît à la figure 7, un deuxième rayon 5 est logé et retenu dans la deuxième rainure 35. Pour des raisons d'équilibrage des tensions dans la roue 1, les rayons retenus sur un même doigt 25 sont orientés dans deux sens sensiblement opposés.

Parce qu'il est identique au premier, le montage du deuxième rayon n'est pas décrit plus en détail.

On remarque, par exemple au niveau de la première ailette 31, que la distance qui sépare le premier trou 81 de la deuxième extrémité 52 est plus grande que la distance entre ce trou 81 et la première extrémité 51. Cela renforce la résistance mécanique de l'ailette 31 pour s'opposer à la traction d'un rayon. Etant donné que l'axe de perçage P-P' des trous 81, 82, 83 des ailettes est décalé comme on l'a dit, le même effet technique est obtenu pour le deuxième rayon au niveau de la troisième ailette 33. En d'autres termes les premier 81 et troisième 83 trous sont situés respectivement du côté de l'extrémité de l'ailette opposé au sens de traction.

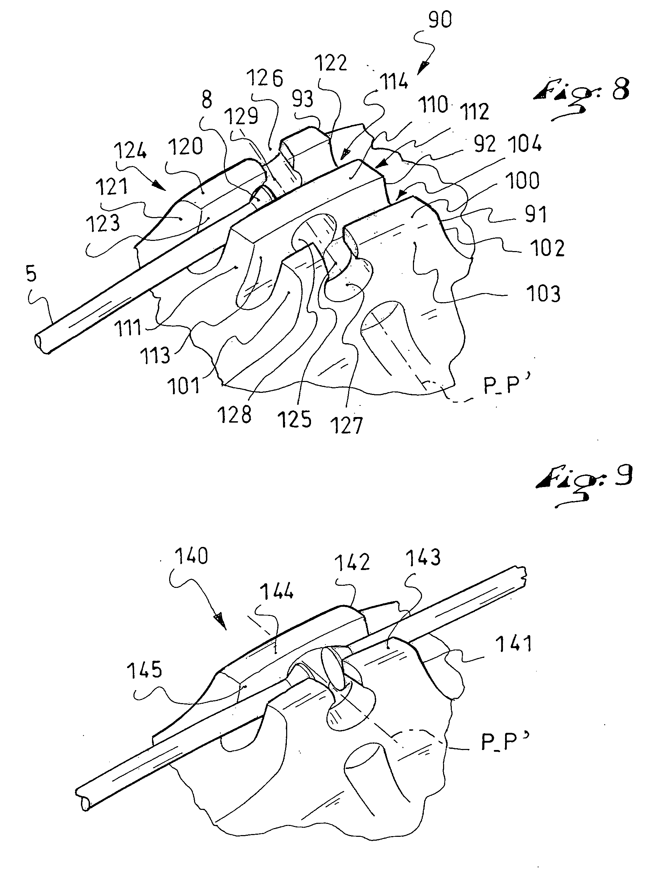

Les autres formes de réalisation de l'invention sont présentées ci-après à l'aide des figures 8 à 12. Pour des raisons de commodité, seules les différences par rapport à la première forme sont mises en évidence.

Pour la deuxième forme de réalisation, comme on le voit sur la figure 8, on retrouve un doigt 90 avec trois ailettes successives 91, 92, 93.

La première ailette 91 présente un sommet discontinu 100, une première extrémité 101, une deuxième extrémité 102, et deux faces 103, 104. La deuxième ailette 92 présente un sommet continu 110, une première extrémité 111, une deuxième extrémité 112, et deux faces 113. 114. La troisième ailette 93 présente un sommet discontinu 120, une première extrémité 121, une deuxième extrémité 122, et deux faces 123, 124.

Ce qui est spécifique à la deuxième forme de réalisation, c'est qu'elle comprend trois ailettes 91, 92, 93 dont celle 92 du centre présente un sommet continu, et les deux extrêmes 91, 93 présentent chacune un sommet discontinu. Le corollaire est que deux passages 125, 126 sont ménagés dans les première 91 et troisième 93 ailettes pour accéder à des trous 127, 128, 129 formés successivement dans les ailettes. En d'autres termes la butée radiale est sur l'ailette centrale et les passages sont sur les ailettes externes. Les rayons sont solidarisés au doigt 90 comme pour la première forme de réalisation.

La troisième forme de réalisation est présentée à l'aide de la figure 9. Dans ce cas un doigt 140 porte seulement deux ailettes 141, 142. L'une 141 présente un sommet discontinu 143, tandis que l'autre présente un sommet continu 144. Selon cette forme de réalisation, la seule rainure 145 comprise entre les deux ailettes 141, 142 accueille deux têtes 8 pour deux rayons 5, ces derniers étant orientés selon des directions opposées.

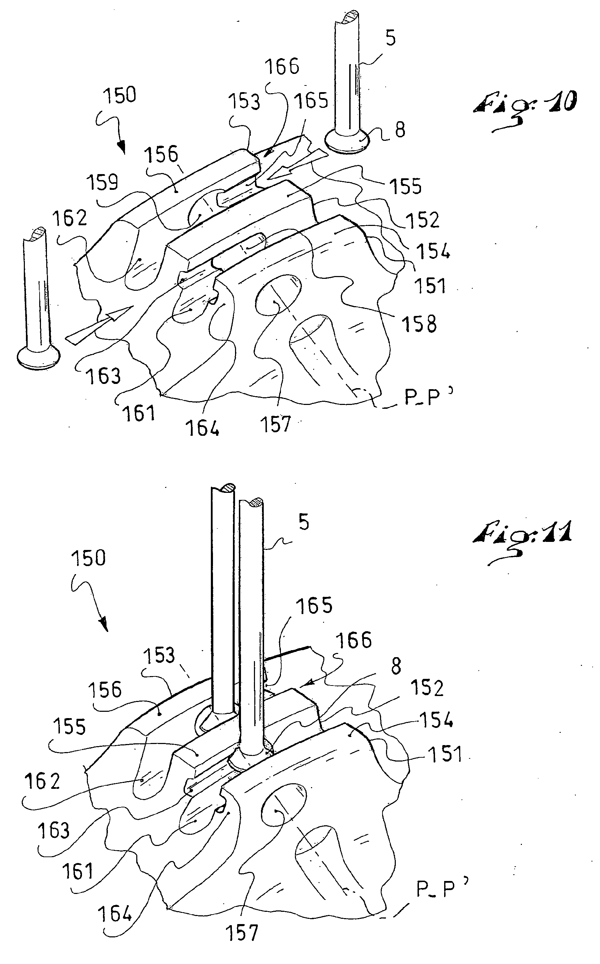

La quatrième forme de réalisation est présentée à l'aide des figures 10 à 12. Dans ce cas un doigt 150 porte trois ailettes 151, 152, 153, chacune respectivement avec un sommet continu 154, 155, 156. Les ailettes sont percées transversalement respectivement par des trous 157, 158, 159. Bien entendu les trous 157, 158, 159 définissent des butées pour l'appui de têtes 8 quand des rayons 5 sont sous tension. Les sommets continus 154, 155, 156 constituent des moyens de retenue des têtes 8 selon une direction radiale du moyeu.

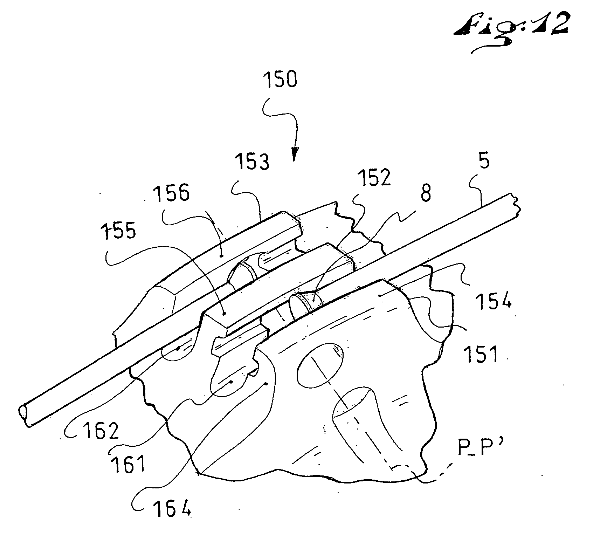

Ce qui est spécifique à la quatrième forme de réalisation de l'invention, c'est la mise en place des têtes 8 dans les première 161 et deuxième 162 rainures délimitées entre les ailettes. Ainsi la première rainure 161 présente un élargissement 163 depuis une extrémité 164 jusqu'aux trous 157, 158. La deuxième rainure 162 présente un élargissement 165 depuis une extrémité 166 jusqu'aux trous 158, 159. Bien entendu, chaque élargissement est prévu pour laisser passer la tête 8 dans un sens de glissement vers les trous. Lors du déplacement de la tête 8 chaque rayon 5 est engagé par coulissement selon la direction tangentielle en étant dressé radialement pour faire saillie par rapport à la rainure 161, 162, comme on le voit sur la figure 11. Ensuite, lorsque les têtes 8 sont à la hauteur des trous 157, 158, 159, il suffit de rabattre les rayons 5 dans les rainures 161, 162, selon la figure 12, pour qu'ils puissent relier la jante au moyeu.

D'une manière générale, l'invention est réalisée à partir de matériaux et selon des techniques de mise en oeuvre connus de l'homme du métier.

Bien entendu, l'invention n'est pas limitée aux formes de réalisation décrites, et comprend tous les équivalents techniques pouvant entrer dans la portée des revendications qui vont suivre.

En particulier, les trous qui traversent les ailettes peuvent présenter des formes diverses, y compris allongées.

L'approche d'un rayon avec sa tête vers une rainure peut se faire selon une direction inclinée jusqu'à 45°, dans un plan perpendiculaire à l'axe X-X'.

Les encoches entre les doigts pourraient ne pas être creusées, c'est-à-dire que les collerettes seraient pleines. Dans ce cas la périphérie d'un flasque présenterait au moins une rainure circulaire continue entre deux collerettes, à la manière d'une poulie.

Tout ce qui a été décrit pour un flasque 17, 18 s'applique à l'autre flasque. Ainsi chaque flasque 17, 18 comprend une double butée et un moyen d'engagement du rayon.

Généralement le moyeu 3 comprend au moins deux ailettes 31, 32, 33, 91, 92, 93, 141, 142, 151, 152, 153, une ailette définissant une double butée, une autre ailette définissant des moyens d'engagement du rayon et une butée tangentielle.

Souvent le moyeu 3 comprend trois ailettes, des moyens d'engagement du rayon étant définis par l'ailette centrale ou par une ou deux ailettes externes.

## Revendications

1. Roue (1) comprenant une jante (2), un moyeu (3), et au moins un dispositif de raccordement (4) de la jante (2) au moyeu (3), le dispositif de raccordement (4) comprenant un rayon (5) associé à une première tête (8), le moyeu (3) définissant une première rainure (34, 161), pour l'accueil d'une portion du rayon (5), dans un plan perpendiculaire à l'axe (X-X') de la roue (1) et selon une direction tangentielle par rapport au moyeu (3), le moyeu (3) définissant encore une butée (41, 42, 81, 82, 83, 127, 128, 129, 157, 158, 159) selon la direction tangentielle pour l'appui de la tête (8), **caractérisée par le fait que** le moyeu (3) comprend un moyen de retenue de la tête (8) selon une direction radiale, quand le rayon (5) est orienté tangentiellement par rapport au moyeu (3).

2. Roue (1) selon la revendication 1, **caractérisée par le fait que** le moyeu (3) comprend une double butée, tangentielle et radiale.

3. Roue (1) selon la revendication 1 ou 2, **caractérisée par le fait que** chaque flasque (17, 18) comprend une double butée et un moyen d'engagement du rayon.

4. Roue (1) selon l'une des revendications 1 à 3, **caractérisée par le fait que** le moyeu (3) comprend une ailette (31, 33, 92, 142, 151, 152, 153) définissant une double butée, et une autre ailette (32, 91, 93, 141) définissant des moyens d'engagement du rayon et une butée tangentielle.

5. Roue (1) selon l'une des revendications 1 à 4, **caractérisée par le fait que** le moyeu (3) comprend trois ailettes (31, 32, 33, 91, 92, 93, 151, 152, 153), des moyens d'engagement du rayon étant définis par l'ailette centrale ou par une ou deux ailettes externes.

6. Roue (1) selon la revendication 1, **caractérisée par le fait que** le moyeu (3) comprend une première ailette (31, 91, 141, 151) et une deuxième ailette (32, 92, 142, 152), la première rainure (34, 161) étant délimitée entre la première et la deuxième ailette, un premier trou transversal (81, 127, 157) de la première ailette formant la butée (41) et/ou un deuxième trou transversal (82, 128, 158) de la deuxième ailette formant une butée (41), le moyen de retenue de la tête (8) selon la direction radiale comprenant le sommet continu (50, 110, 144, 154, 155) d'une ailette (31, 92, 144, 151, 152), là où il contourne le trou définissant la butée (41).

7. Roue (1) selon la revendication 6, **caractérisée par le fait que** le sommet (60) de la deuxième ailette (32) est discontinu, un premier passage (84) ouvrant le sommet (60) vers le trou (82) de la deuxième ailette (32).

8. Roue (1) selon la revendication 6, **caractérisée par le fait que** le moyeu (3) comprend une troisième ailette (33, 93, 153), une deuxième rainure (35, 162) étant délimitée entre la deuxième et la troisième ailette, le deuxième trou transversal (82, 128, 158) de la deuxième ailette formant une butée (41, 42) et/ou un troisième trou transversal (83, 129, 159) de la troisième ailette formant une butée (42).

9. Roue (1) selon la revendication 8, **caractérisée par le fait que** le sommet (60) de la deuxième ailette (32) est discontinu, un passage (84) ouvrant le sommet (60) vers le trou (82) de la deuxième ailette (32).

10. Roue (1) selon la revendication 8, **caractérisée par le fait que** la première ailette (91) présente un sommet discontinu (100), la deuxième ailette (92) présente un sommet continu (110), la troisième ailette (93) présente un sommet discontinu (120), deux passages (125, 126) étant ménagés dans les première (91) et troisième (93) ailettes pour accéder à des trous (127, 129) formés dans les ailettes.

11. Roue (1) selon la revendication 6, **caractérisée par le fait que** la première rainure (161) présente un élargissement depuis une extrémité (164) jusqu'aux trous transversaux (157,158).

12. Roue (1) selon l'une des revendications 1 et 6 à 11, **caractérisée par le fait que** le rayon (5) présente une section circulaire, et **par le fait que** la tête (8) présente une section circulaire.

13. Roue (1) selon l'une des revendications 1 et 6 à 12, **caractérisée par le fait que** la rainure (34, 35, 161, 162) présente une largeur égale ou à peine supérieure à celle du diamètre du rayon (5), la tête (8) présentant un diamètre sensiblement supérieur à celui du rayon.

14. Roue (1) selon l'une des revendications 6 à 13, **caractérisée par le fait que** le moyeu (3) comprend un flasque (17, 18), le flasque comprenant une alternance de doigts (25) et d'encoches (26) répartis de manière circulaire dans un plan perpendiculaire à l'axe (X-X'), chaque ailette (31, 32, 33, 91, 92, 93, 141, 142, 151, 152, 153) étant une extension radiale d'un doigt.
